# EUROPEAN PATENT APPLICATION

(11) **EP 2 884 705 A1**
(43) Date of publication of application: **17.06.2015**
(21) Application number: 14182302.1
(22) Date of filing: 26.08.2014
(51) Int. Cl.: H04L 12/721, H04W 40/20, H04L 12/775

(54) **Information processing device, communication method, and computer-readable storage medium storing communication program**

(30) Priority: 13.09.2013 JP 2013190803
(71) Applicant: FUJITSU LIMITED, Kawasaki-shi, Kanagawa 211-8588 (JP)
(72) Inventor: Morosawa, Atsushi, Kanagawa, 211-8588 (JP); Matsui, Takao, Kanagawa, 211-8588 (JP)
(74) Representative: Hoffmann Eitle

(57) **Abstract**

A node address table (NAT) (142a, 142b) stores therein a MAC address and a node ID (NID) representing the position of a node (10) in a rack (1) in association with each other for each node, and retrieves NIDs of a destination and its own node based on a destination of a packet and the MAC address of the own node. A destination determination unit (142, 142d) determines a routing destination of the packet based on the NIDs of the destination and the own node. A routing unit (143) routes the packet to the routing destination determined by the destination determination unit (142, 142d).

## Description

### FIELD

The embodiments discussed herein are related to an information processing device, a communication method, and a computer-readable storage medium storing a communication program.

### BACKGROUND

In recent years, highly integrated servers including a large number of nodes mounted in a rack thereof have been utilized as a server for cloud computing or for a data center. Herein, a node means an information processing device including a central processing unit (CPU), a memory, a storage, a crossbar switch, and the like.

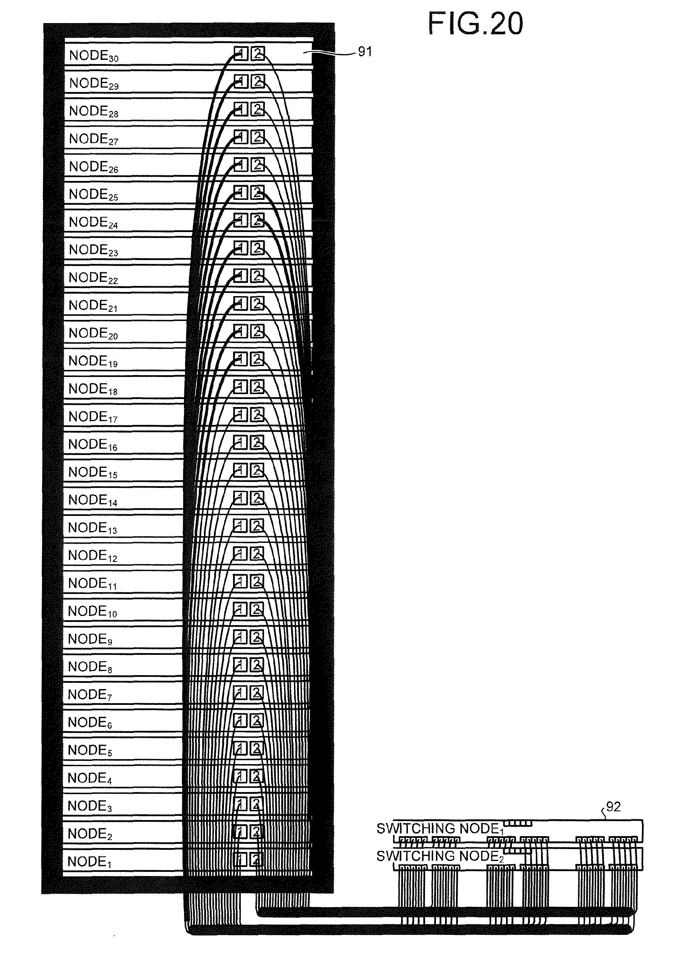

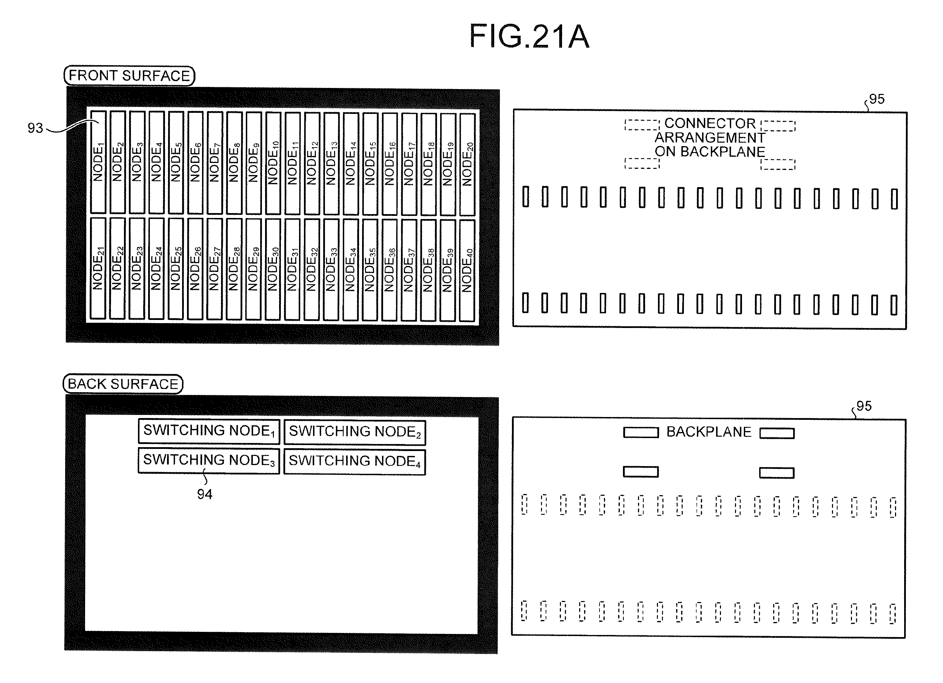

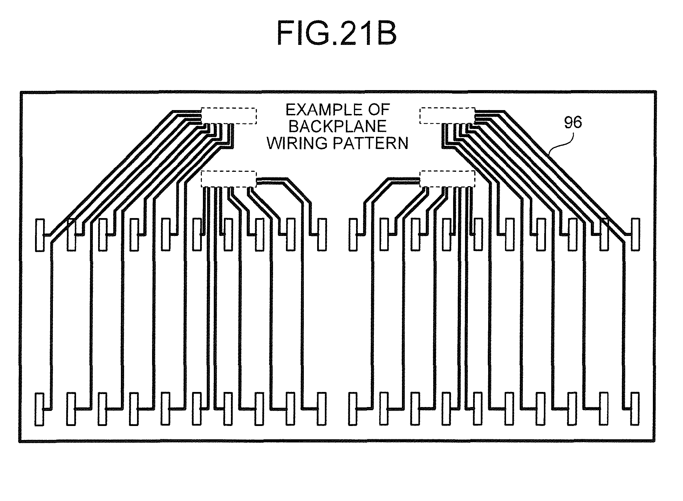

For example, several tens to hundreds of nodes are mounted in the rack. The nodes are connected to each other through a cable or a backplane. FIG. 20 is a diagram illustrating an example of a cable connection, and FIGS. 21A and 21B are diagrams illustrating an example of a backplane connection. FIG. 21A illustrates a front surface and a back surface of a housing utilizing the backplane connection, and FIG. 21B illustrates an example of a backplane wiring pattern.

In FIG. 20, thirty nodes 91 are connected to each other through cables via two switching nodes 92. In FIG. 21A, forty nodes 93 are connected to each other via four switching nodes 94 and a backplane 95. In FIG. 21A, the front surface of the housing is illustrated in the upper row, and the back surface of the housing is illustrated in the lower row.

As illustrated in FIG. 20, the number of cables is significantly increased as the number of nodes becomes large in the cable connection. Accordingly, when the cable connection is used, cable cost increases, maintenance by inserting or removing the cable is burdensome, and a space occupied by the cables increases.

On the other hand, as illustrated in FIG. 21B, a wiring pattern 96 becomes large scale as the number of nodes increases in the backplane connection. Accordingly, when the backplane connection is used, the wiring in the backplane is difficult, the number of layers in the backplane increases, and production cost increases. In addition, when the backplane connection is used, a risk caused by a failure in the backplane increases, and the entire system should be stopped to maintain the backplane.

Accordingly, a technique has been developed for performing data transfer between modules in the housing in a wireless manner without using the cable connection or the backplane connection (for example, refer to Japanese Laid-open Patent Publication No. 2005-6329). There is also related art in which a tray part connecting a server device and a console part of the server device communicates with the console part in a wireless manner (for example, refer to Japanese Laid-open Patent Publication No. 2006-185419).

Wireless communication is not suitable for communication at a distance because radio waves are easily attenuated. When a large number of information processing devices are connected through the wireless communication, the communication is performed via a plurality of information processing devices. Accordingly, although a next transmission destination relayed to a final destination should be determined as a routing destination in the wireless communication, it is difficult to determine a proper routing destination for each of the information processing devices with respect to a large number of destinations.

Accordingly, it is an object in one aspect of an embodiment of the invention to provide an information processing device that automatically determines a proper routing destination with respect to a large number of destinations.

### SUMMARY

According to an aspect of an embodiment, a information processing device includes an identifier storage unit that stores a device identifier, the device identifier identifying the information processing device and a position at which the information processing device is mounted in a housing, in association with an address of the information processing device; an identifier retrieval unit that retrieves the device identifier corresponding to a destination address of data from the identifier storage unit; a determination unit that determines a routing destination of the data based on the device identifier retrieved by the identifier retrieval unit and the device identifier of the information processing device; and a control unit that performs control to transmit the data to the routing destination determined by the determination unit.

### BRIEF DESCRIPTION OF DRAWINGS

FIG. 1 is a diagram illustrating a configuration of an information processing system according to a first embodiment;
FIG. 2 is a diagram for explaining wireless local area network (WLAN) communication using an AP;
FIG. 3A is a diagram illustrating a configuration of an XB;
FIG. 3B is a diagram illustrating a configuration of another XB;
FIG. 4 is a diagram illustrating an example of destinations and identifiers stored in a node address table (NAT);
FIG. 5 is a diagram illustrating an example of a relation between a node ID (NID) and a node position in a rack;
FIG. 6 is a flowchart illustrating the procedure of reception processing by a node according to the first embodiment;
FIG. 7 is a flowchart illustrating the procedure of transmission processing by the node according to the first embodiment;
FIG. 8 is a diagram illustrating a case in which a packet does not arrive;
FIG. 9 is a diagram illustrating an example of a routing table;
FIG. 10 is a diagram illustrating an example of an erroneous setting of the routing table;
FIG. 11 is a diagram illustrating an example of grouping the nodes;
FIG. 12A is a diagram illustrating a configuration of an XB according to a second embodiment;
FIG. 12B is a diagram illustrating another configuration of the XB according to a second embodiment;
FIG. 13 is a diagram illustrating an example of group IDs (GIDs) and presence or absence of STA function stored in a GID-WSTA;
FIG. 14 is a flowchart illustrating the procedure of reception processing by a node according to the second embodiment;
FIG. 15 is a flowchart illustrating the procedure of transmission processing by the node according to the second embodiment;
FIG. 16A is a diagram illustrating a communication image, corresponding to the first embodiment, according to a third embodiment;
FIG. 16B is a diagram illustrating a communication image, corresponding to the second embodiment, according to a third embodiment;
FIG. 17 is a first flowchart illustrating the procedure of reception processing by a node according to the third embodiment;
FIG. 18 is a second flowchart illustrating the procedure of reception processing by the node according to the third embodiment;
FIG. 19 is a diagram illustrating a hardware configuration of the XB that executes a communication program;
FIG. 20 is a diagram illustrating an example of a cable connection;
FIG. 21A is a diagram illustrating a front surface and a back surface of a housing using a backplane connection; and
FIG. 21B is a diagram illustrating an example of a backplane wiring pattern.

### DESCRIPTION OF EMBODIMENTS

Preferred embodiments of the present invention will be explained with reference to accompanying drawings. A technique disclosed herein is not limited to the embodiments described below.

### [a] First embodiment

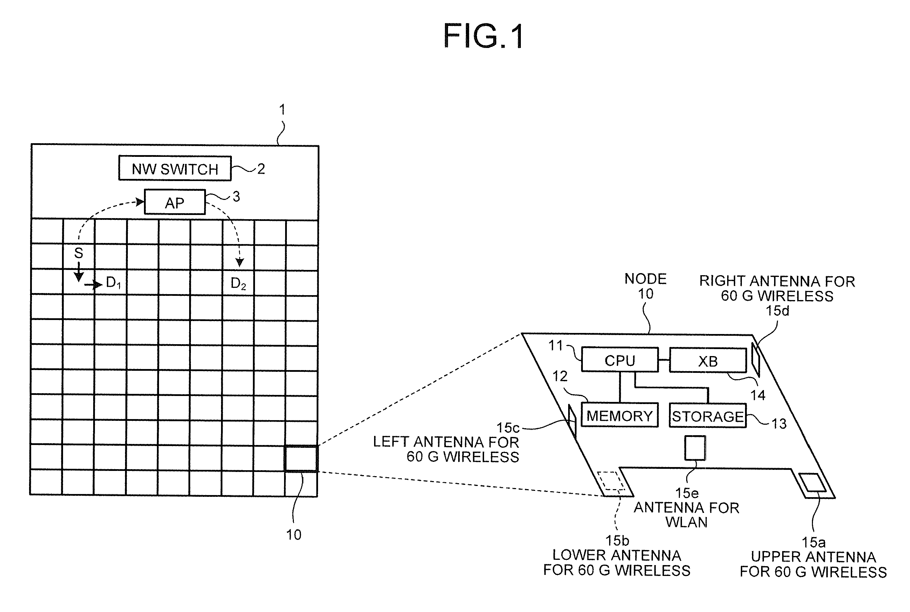

First, the following describes a configuration of an information processing system according to a first embodiment. FIG. 1 is a diagram illustrating the configuration of the information processing system according to the first embodiment. As illustrated in FIG. 1, the information processing system is a highly integrated server including an NW switch 2, an AP 3, and the ninety-nine nodes 10 mounted in a rack 1. Although one NW switch 2 and ninety-nine nodes 10 are mounted in the rack 1 herein, more NW switches 2, more nodes 10, or less nodes 10 may be mounted in one rack.

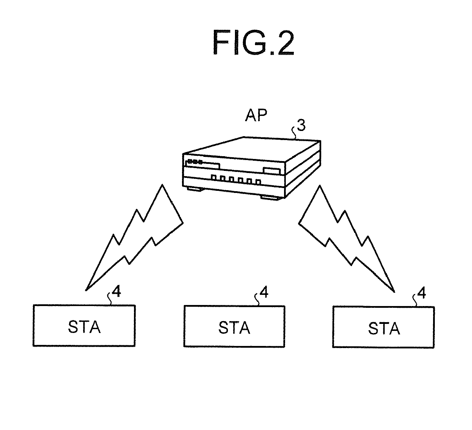

The NW switch 2 is a switch for connecting with an external network such as the Internet. The AP 3 is an access point of a wireless local area network (WLAN) using a frequency of 2.4 GHz band and 5 GHz band. FIG. 2 is a diagram for explaining WLAN communication using the AP 3. FIG. 2 is a wireless system including the AP 3 and three stations (STAs) 4.

As illustrated in FIG. 2, when transferring data to the other STA 4, the STA 4 transfers the data via the AP 3. Accordingly, when the number of STAs 4 is large, the data concentrates on the AP 3 and congestion occurs. Communication speed of WLAN is about 600 Mbits/second (Mbps) and wired communication speed is higher than 1.0 Gbit/second (Gbps), so that the communication speed of WLAN is lower than the wired communication speed.

A communication mode illustrated in FIG. 2 is called an infrastructure mode, and communication between devices is performed via the AP 3. On the other hand, a mode in which the devices directly communicate with each other without using the AP 3 is called an ad hoc mode. The infrastructure mode is suitable for a case in which a large number of devices communicate with each other, and the ad hoc mode is suitable for a case in which a small number of devices communicate with each other.

The node 10 is an information processing device including a CPU 11, a memory 12, a storage 13, and an XB 14. The node 10 also includes an upper antenna for 60 G wireless 15a, a lower antenna for 60 G wireless 15b, a left antenna for 60 G wireless 15c, a right antenna for 60 G wireless 15d, and an antenna for WLAN 15e. The nodes 10 are housed in a housing. The upper antenna for 60 G wireless 15a, the lower antenna for 60 G wireless 15b, the left antenna for 60 G wireless 15c, the right antenna for 60 G wireless 15d, and the antenna for WLAN 15e are connected to the XB 14.

The CPU 11 is a central processing unit that reads and executes a computer program from the memory 12. The memory 12 is a random access memory (RAM) that stores therein the computer program or results in the midway obtained in the execution of the computer program. The storage 13 is a nonvolatile memory that stores therein data, for example, a NAND flash memory. The storage 13 also stores therein the computer program installed in the node 10.

The XB 14 is a crossbar switch for communicating with an other node 10. The XB 14 is one LSI. The upper antenna for 60 G wireless 15a is an antenna for 60 G wireless that uses a frequency of 60 GHz band, installed facing upward, and used for communicating with the node 10 adjacent above in the rack 1. Similarly, the lower antenna for 60 G wireless 15b is the antenna for 60 G wireless, installed facing downward, and used for communicating with the node 10 adjacent below in the rack 1.

The left antenna for 60 G wireless 15c is the antenna for 60 G wireless, installed facing leftward, and used for communicating with the node 10 adjacent on the left in the rack 1. The right antenna for 60 G wireless 15d is the antenna for 60 G wireless, installed facing rightward, and used for communicating with the node 10 adjacent on the right in the rack 1.

Communication speed of the 60 G wireless can be about several Gbps, which is higher than that of the WLAN. However, radio waves hardly reach in the 60 G wireless and the housing blocks the radio waves, so that it is difficult to communicate with the adjacent upper, lower, left, and right nodes 10 using one 60 G wireless module. Accordingly, the node 10 includes four 60 G wireless modules that communicate with the adjacent upper, lower, left, and right nodes 10, respectively. The antenna for WLAN 15e is a WLAN antenna.

The node 10 communicates with other nodes 10 having a distance therefrom equal to or smaller than a predetermined threshold using the 60 G wireless, and communicates with other nodes 10 having a distance therefrom larger than the predetermined threshold using the WLAN. For example, in FIG. 1, in a case of communicating with an other node 10 positioned at D₁, a node 10 positioned at S in the rack 1 performs communication via a node positioned below in the rack 1 using the 60 G wireless because the distance therebetween is short. In a case of communicating with an other node 10 positioned at D₂, the node 10 positioned at S in the rack 1 performs communication using the WLAN via the AP 3 because the distance therebetween is long.

In this way, the node 10 communicates with the other nodes 10 having the distance therefrom smaller than the predetermined threshold using the 60 G wireless, and communicates with the other nodes 10 having the distance therefrom equal to or larger than the predetermined threshold using the WLAN. Accordingly, the node 10 can perform wireless communication at high speed with a large number of nodes 10 without causing congestion at the AP 3.

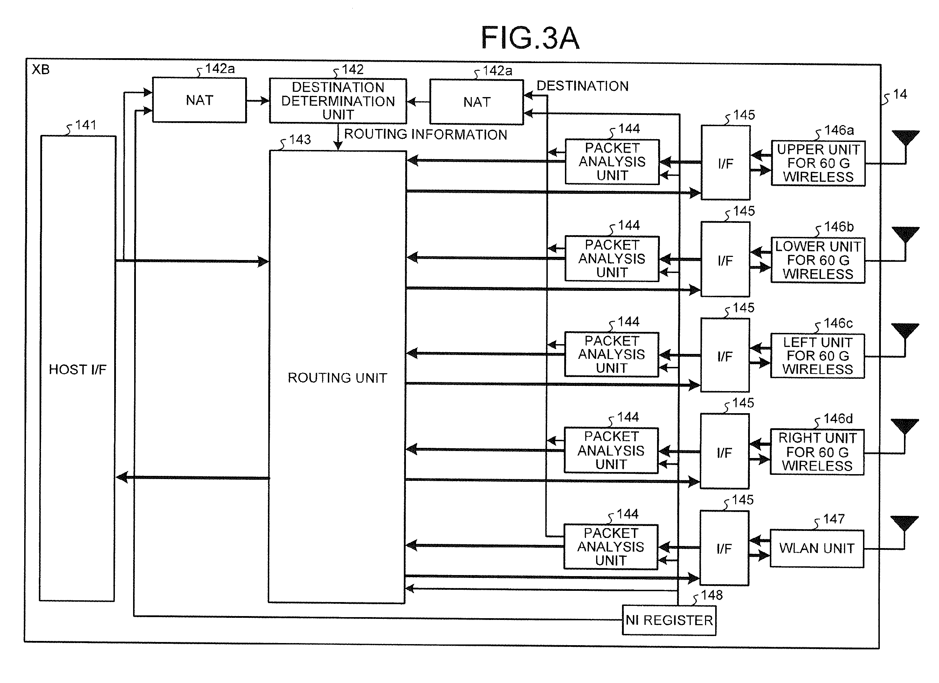

Next, the following describes a configuration of the XB 14. FIG. 3A is a diagram illustrating the configuration of the XB 14. As illustrated in FIG. 3A, the XB 14 includes a host interface (I/F) 141, two node address tables (NATs) 142a, a destination determination unit 142, a routing unit 143, five packet analysis units 144, and five I/Fs 145. The XB 14 also includes an upper unit for 60 G wireless 146a, a lower unit for 60 G wireless 146b, a left unit for 60 G wireless 146c, a right unit for 60 G wireless 146d, a WLAN unit 147, and an NI register 148.

The host I/F 141 is an interface with the CPU 11 of its own node. The host I/F 141 passes a packet received from the CPU 11 to the routing unit 143, and passes a packet received from the routing unit 143 to the CPU 11 of the own node. The host I/F 141 also passes a destination of the packet received from the CPU 11 of the own node to the NAT 142a.

The NAT 142a is a retrieval table for retrieving an identifier that identifies each node 10. The NAT 142a receives the destination of the packet from the host I/F 141 or the packet analysis unit 144, retrieves the identifier of the destination node 10, and passes the retrieved identifier of the destination node 10 to the destination determination unit 142. The NAT 142a retrieves the identifier of the own node from information about the own node based on information of the NI register 148, and passes the retrieved identifier of the own node to the destination determination unit 142.

The destination determination unit 142 determines a routing destination of the packet based on the identifier of the destination of the packet retrieved with the NAT 142a and the identifier of the own node, and passes information about the routing destination as routing information to the routing unit 143. The identifier of the node 10 retrieved with the NAT 142a and details about processing by the destination determination unit 142 will be described later.

The routing unit 143 receives the packet from the host I/F 141, and passes the packet to any of the I/Fs 145 based on the routing information received from the destination determination unit 142 and information of the NI register 148. The routing unit 143 also receives a packet from any of the packet analysis units 144, and passes the packet to the host I/F 141 or any of the I/Fs 145 based on the routing information received from the destination determination unit 142 and the information of the NI register 148.

The packet analysis unit 144 receives the packet from the I/F 145 and extracts a destination. The packet analysis unit 144 passes the extracted destination to the NAT 142a and passes the packet to the routing unit 143. If the packet analysis unit 144 determines that the destination is the own node based on the information of the NI register 148, the packet analysis unit 144 may not pass the extracted destination to the NAT 142a.

The I/F 145 converts a signal received from the 60 G wireless module or the WLAN unit 147 into a packet, and passes the packet to the corresponding packet analysis unit 144. The I/F 145 receives the packet routed by the routing unit 143, and instructs the corresponding 60 G wireless module or the corresponding WLAN module to transmit the packet.

The upper unit for 60 G wireless 146a, the lower unit for 60 G wireless 146b, the left unit for 60 G wireless 146c, and the right unit for 60 G wireless 146d are 60 G wireless modules that perform wireless communication using a frequency of 60 GHz band.

The upper unit for 60 G wireless 146a performs wireless communication with the node 10 adjacent above in the rack 1 using the upper antenna for 60 G wireless 15a illustrated in FIG. 1. The lower unit for 60 G wireless 146b performs wireless communication with the node 10 adjacent below in the rack 1 using the lower antenna for 60 G wireless 15b illustrated in FIG. 1. The left unit for 60 G wireless 146c performs wireless communication with the node 10 adjacent on the left in the rack 1 using the left antenna for 60 G wireless 15c illustrated in FIG. 1. The right unit for 60 G wireless 146d performs wireless communication with the node 10 adjacent on the right in the rack 1 using the right antenna for 60 G wireless 15d illustrated in FIG. 1.

The WLAN unit 147 has a function of the STA 4, and communicates with the WLAN unit 147 in an other node 10 via the AP 3 using the WLAN. The NI register 148 is a register that stores therein information about the own node such as an Internet Protocol (IP) address and a media access control (MAC) address.

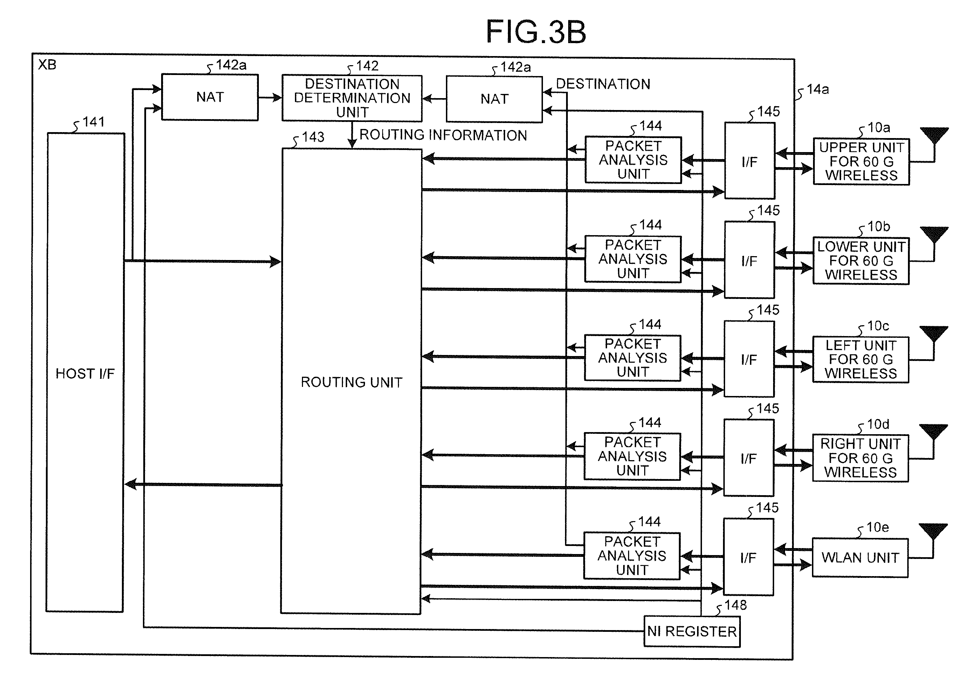

Although the XB 14 illustrated in FIG. 3A includes the 60 G wireless modules and the WLAN unit 147, the 60 G wireless modules and the WLAN unit 147 may be provided outside the XB. The FIG. 3B is a diagram illustrating another configuration of the XB of which 60 G wireless modules and the WLAN unit 147 are provided outside.

As illustrated in FIG. 3B, an XB 14a does not include the upper unit for 60 G wireless 146a, the lower unit for 60 G wireless 146b, the left unit for 60 G wireless 146c, the right unit for 60 G wireless 146d, and the WLAN unit 147. The XB 14a performs wireless communication using an upper unit for 60 G wireless 10a, a lower unit for 60 G wireless 10b, a left unit for 60 G wireless 10c, a right unit for 60 G wireless 10d, and a WLAN unit 10e provided outside.

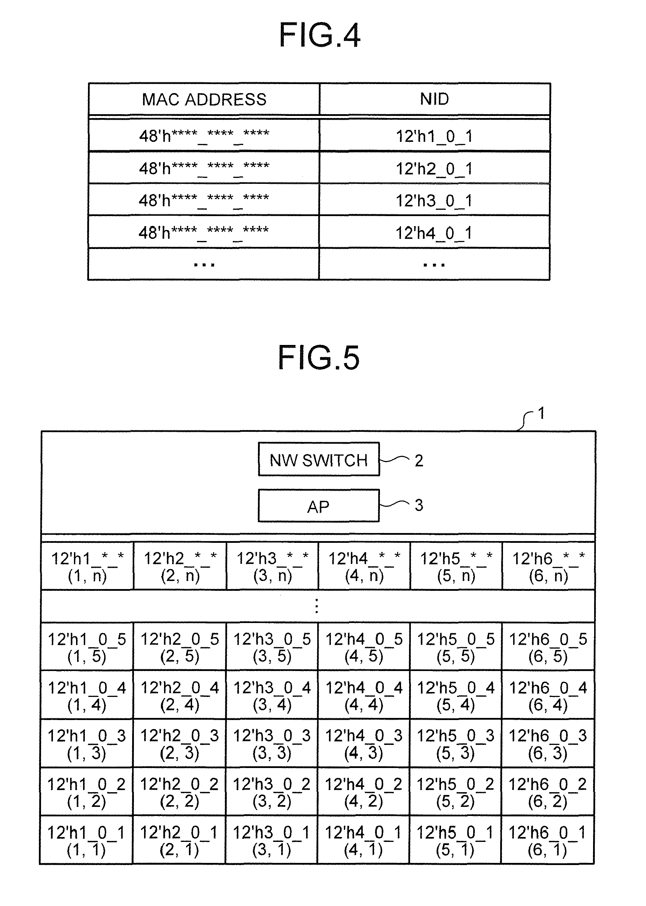

Next, the following describes the identifier of the node 10 retrieved with the NAT 142a and details about the processing by the destination determination unit 142 with reference to FIGS. 4 and 5. FIG. 4 is a diagram illustrating an example of the destinations and identifiers stored in the NAT 142a, and FIG. 5 is a diagram illustrating an example of a relation between the node ID (NID) and a node position in the rack 1. Herein, the NID represents an identifier for identifying the node 10.

As illustrated in FIG. 4, the NAT 142a stores therein a MAC address as the destination and an NID in association with each other for each node 10, and retrieves the NID based on the MAC address. The MAC address is 48 bits, "h" indicates a hexadecimal representation, and "*" indicates a digit in the hexadecimal representation. One "*" indicates 4-bit information, and twelve "*" indicate: 4 x 12 = 48 bits. Herein, the case of using the MAC address as the destination is described. However, the destination may be other than the MAC address.

The NID is 12 bits, and represented by three hexadecimal digits connected by "_". The NID is an identifier for identifying each node 10 and represents the position of the node 10 in the rack 1. Upper 4 bits among 12 bits represent an X-coordinate of a slot in the rack 1, and lower 8 bits represent a Y-coordinate of the slot in the rack 1. Herein, the slot means a space in the rack 1 in which the node 10 is housed.

As illustrated in FIG. 5, coordinates of the slot at the lower left in the rack 1 are (1, 1), and the NID of the node 10 housed in the slot is 12'h1_0_1. The coordinates of the slot at the lower right in the rack 1 are (6, 1), and the NID of the node 10 housed in the slot is 12'h6_0_1. The coordinates of the slot at the upper left in the rack 1 are (1, n), and the NID of the node 10 housed in the slot is 12'h1_*_*. In this case, the rack 1 includes six slots in the X-axis direction and includes n slots in the Y-axis direction. Two "*" connected to each other with "_" are hexadecimal representation of n. Although the number of bits of the NID is twelve herein, the number of bits of the NID is selected corresponding to the number of slots.

In this way, the NID represents the position of the node 10 in the rack 1, so that the destination determination unit 142 can find in which direction in its own node the destination node 10 is arranged in the rack 1 based on the NID of the destination of the packet, and can determine the routing destination of the packet.

That is, if the sum of a difference between the X-coordinates of the destination and the own node and a difference between the Y-coordinates of the destination and the own node is larger than a predetermined threshold, the destination determination unit 142 determines the WLAN unit 147 as the routing destination. On the other hand, if the sum of the difference between the X-coordinates of the destination and the own node and the difference between the Y-coordinates of the destination and the own node is not larger than the predetermined threshold, the destination determination unit 142 determines any of the 60 G wireless modules as the routing destination based on the comparison result between the X-coordinates of the destination and the own node. That is, if the X-coordinate of the destination is larger than the X-coordinate of the own node, the destination determination unit 142 determines the right unit for 60 G wireless 146d as the routing destination. If the X-coordinate of the destination is smaller than the X-coordinate of the own node, the destination determination unit 142 determines the left unit for 60 G wireless 146c as the routing destination.

If the X-coordinate of the destination is equal to the X-coordinate of the own node, the destination determination unit 142 compares the Y-coordinate of the destination with the Y-coordinate of the own node. If the Y-coordinate of the destination is larger than the Y-coordinate of the own node, the destination determination unit 142 determines the upper unit for 60 G wireless 146a as the routing destination. If the Y-coordinate of the destination is not larger than the Y-coordinate of the own node, the destination determination unit 142 determines the lower unit for 60 G wireless 146b as the routing destination.

In this way, the destination determination unit 142 can automatically determine a proper routing destination by determining the routing destination based on the NID of the destination of the packet and the NID of the own node.

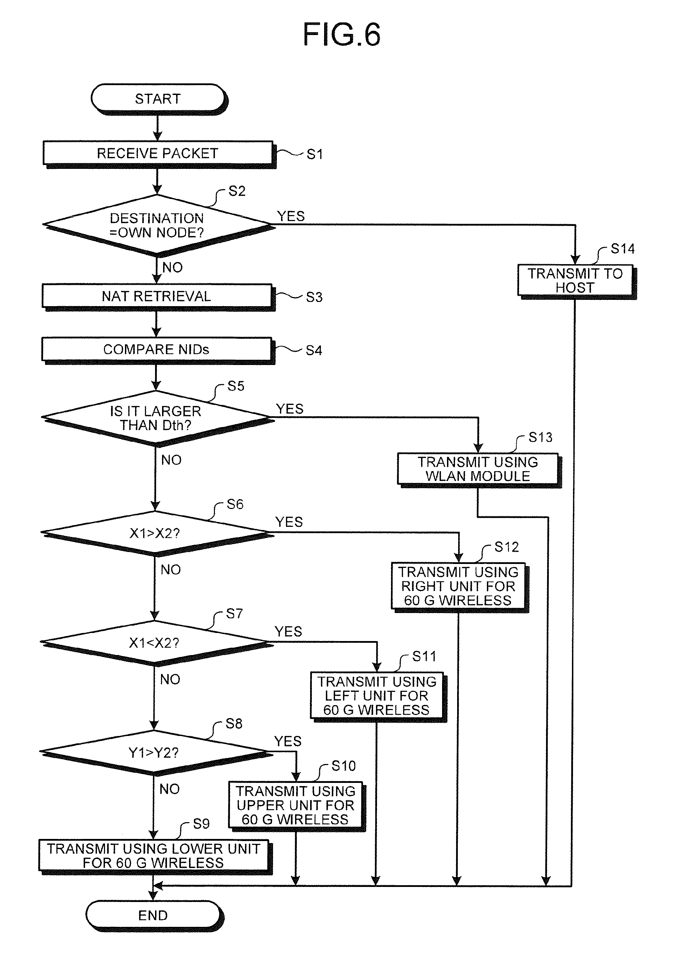

Next, the following describes the procedure of reception processing by the node 10 according to the first embodiment. FIG. 6 is a flowchart illustrating the procedure of the reception processing by the node 10 according to the first embodiment. As illustrated in FIG. 6, when receiving the packet (Step S1), the node 10 determines whether the destination of the packet is the own node (Step S2). If the destination of the packet is the own node, the packet is transmitted to a host (Step S14).

On the other hand, if the destination of the packet is not the own node, the node 10 performs NAT retrieval, that is, table retrieval based on the destination MAC address and the own node using the NAT 142a (Step S3), and retrieves the NIDs of the destination and the own node. The node 10 then compares the NIDs of the destination and the own node with each other (Step S4) to determine whether the sum of the difference between the X-coordinates and the difference between the Y-coordinates is larger than a predetermined threshold Dth (Step S5). If the sum of the difference between the X-coordinates and the difference between the Y-coordinates is larger than the predetermined threshold Dth, the node 10 transmits the packet using the WLAN module (Step S13).

On the other hand, if the sum of the difference between the X-coordinates and the difference between the Y-coordinates is not larger than the predetermined threshold Dth, the node 10 determines whether the X-coordinate of the destination X1 is larger than the X-coordinate of the own node X2 (Step S6). If the X-coordinate of the destination X1 is larger than the X-coordinate of the own node X2, the node 10 transmits the packet using the right unit for 60 G wireless 146d (Step S12).

On the other hand, if the X-coordinate of the destination X1 is not larger than the X-coordinate of the own node X2, the node 10 determines whether the X-coordinate of the destination X1 is smaller than the X-coordinate of the own node X2 (Step S7). If the X-coordinate of the destination X1 is smaller than the X-coordinate of the own node X2, the node 10 transmits the packet using the left unit for 60 G wireless 146c (Step S11).

On the other hand, if the X-coordinate of the destination X1 is not smaller than the X-coordinate of the own node X2, which is a case in which X1 is equal to X2, the node 10 determines whether the Y-coordinate of the destination Y1 is larger than the Y-coordinate of the own node Y2 (Step S8). If the Y-coordinate of the destination Y1 is larger than the Y-coordinate of the own node Y2, the node 10 transmits the packet using the upper unit for 60 G wireless 146a (Step S10). On the other hand, if the Y-coordinate of the destination Y1 is not larger than the Y-coordinate of the own node Y2, the node 10 transmits the packet using the lower unit for 60 G wireless 146b (Step S9).

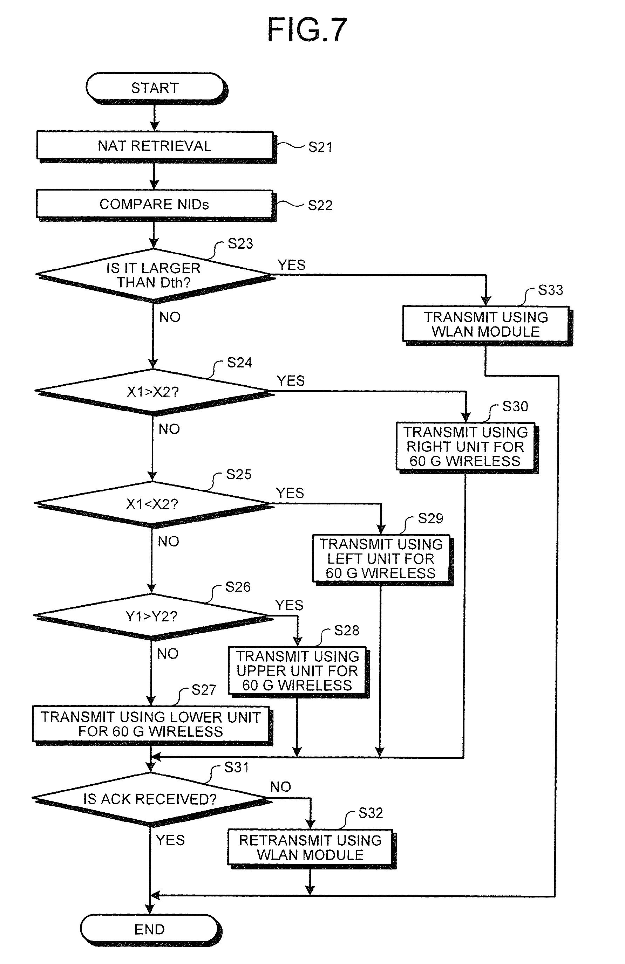

Next, the following describes the procedure of transmission processing by the node 10 according to the first embodiment. FIG. 7 is a flowchart illustrating the procedure of the transmission processing by the node 10 according to the first embodiment. As illustrated in FIG. 7, the node 10 performs NAT retrieval, that is, table retrieval based on the destination MAC address and the own node using the NAT 142a (Step S21), and retrieves the NIDs of the destination and the own node.

The node 10 then compares the NIDs of the destination and the own node with each other (Step S22) to determine whether the sum of the difference between the X-coordinates and the difference between the Y-coordinates is larger than the predetermined threshold Dth (Step S23). If the sum of the difference between the X-coordinates and the difference between the Y-coordinates is larger than the predetermined threshold Dth, the node 10 transmits the packet using the WLAN module (Step S33).

On the other hand, the sum of the difference between the X-coordinates and the difference between the Y-coordinates is not larger than the predetermined threshold Dth, the node 10 determines whether the X-coordinate of the destination X1 is larger than the X-coordinate of the own node X2 (Step S24). If the X-coordinate of the destination X1 is larger than the X-coordinate of the own node X2, the node 10 transmits the packet using the right unit for 60 G wireless 146d (Step S30), and the process proceeds to Step S31.

On the other hand, if the X-coordinate of the destination X1 is not larger than the X-coordinate of the own node X2, the node 10 determines whether the X-coordinate of the destination X1 is smaller than the X-coordinate of the own node X2 (Step S25). If the X-coordinate of the destination X1 is smaller than the X-coordinate of the own node X2, the node 10 transmits the packet using the left unit for 60 G wireless 146c (Step S29), and the process proceeds to Step S31.

On the other hand, if the X-coordinate of the destination X1 is not smaller than the X-coordinate of the own node X2, which is a case in which X1 is equal to X2, the node 10 determines whether the Y-coordinate of the destination Y1 is larger than the Y-coordinate of the own node Y2 (Step S26). If the Y-coordinate of the destination Y1 is larger than the Y-coordinate of the own node Y2, the node 10 transmits the packet using the upper unit for 60 G wireless 146a (Step S28), and the process proceeds to Step S31. On the other hand, if the Y-coordinate of the destination Y1 is not larger than the Y-coordinate of the own node Y2, the node 10 transmits the packet using the lower unit for 60 G wireless 146b (Step S27).

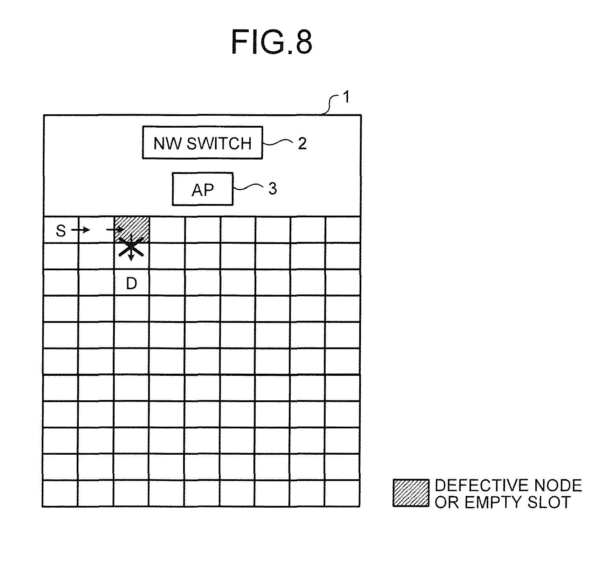

The node 10 determines whether ACK is received (Step S31). The node 10 ends the process if the ACK is received, and retransmits the packet using the WLAN module if the ACK is not received (Step S32). Herein, the ACK means a reception report transmitted to the transmission source when the destination node 10 receives the packet. FIG. 8 is a diagram illustrating a case in which the packet does not arrive. As illustrated in FIG. 8, the packet is not correctly transferred when there is a defective node or an empty slot in a route from the transmission source (S) to the destination (D). In this case, the node 10 of the transmission source cannot receive the ACK, so that the packet is retransmitted with the WLAN module.

As described above, in the first embodiment, the NAT 142a stores therein the MAC address and the NID representing the position of the node 10 in the rack 1 in association with each other for each node 10, and retrieves the NIDs of the destination and the own node based on the destination of the packet and the MAC address of the own node. The destination determination unit 142 then determines the routing destination of the packet based on the NIDs of the destination and the own node, and the routing unit 143 routes the packet to the routing destination determined by the destination determination unit 142. Accordingly, the node 10 can perform routing without using a routing table for associating the destination of the packet with the routing destination.

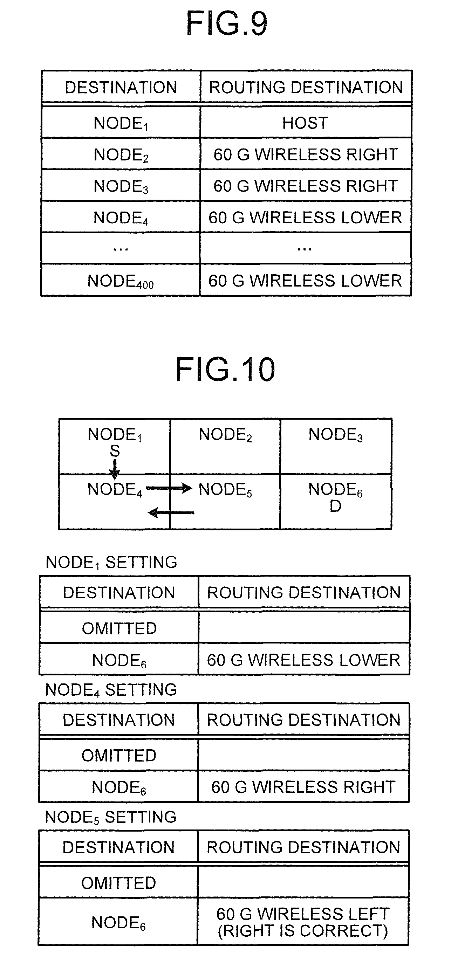

FIG. 9 is a diagram illustrating an example of the routing table. FIG. 9 illustrates the routing table included in the node 10 that is arranged at the upper left in the rack 1. The nodes 10 are arranged from the upper left toward the right of the rack 1, in order such as node₁, node₂, node₃, ..., and when reaches the right end, they are then arranged from the left toward the right in a lower row in order.

In FIG. 9, the routing destination "60 G wireless right" indicates that the routing destination is the right unit for 60 G wireless 146d, and the routing destination "60 G wireless lower" indicates that the routing destination is the lower unit for 60 G wireless 146b.

For example, when the destination of the packet is the node₁, that is, the own node, the routing destination is the CPU 11 of the host, that is, the own node. When the destination of the packet is the node₂, the routing destination is the right unit for 60 G wireless 146d because the node₂ is arranged on the right of the node₁.

When the routing table is used, the destination of the packet needs to be associated with the routing destination for each node 10, so that the setting of the routing destination is complicated when the number of nodes increases. In addition, the packet does not reach the destination when an erroneous routing destination is set.

FIG. 10 is a diagram illustrating an example of an erroneous setting of the routing table. FIG. 10 illustrates a case of transmitting the packet from the node, (S) to the node₆ (D). In FIG. 10, the packet should be transferred in the order of node₁ → node₄ → node₅ → node₆. However, when there is an error in the routing table of the nodes and "60 G wireless left" is set as the routing destination of the node₆, the packet does not reach the node₆.

On the other hand, when the NAT 142a is used as in the first embodiment, the association between the MAC address and the NID is common among the nodes, and it is not necessary to set different pieces of information for each node 10 as in the routing table, so that the setting is prevented from being complicated. Accordingly, a packet loss due to a setting error can be prevented by using the NAT 142a.

In the first embodiment, described is the case in which the node 10 retrieves the NID of the own node using the NAT 142a. Alternatively, the node 10 may store the NID of the own node in the NI register 148.

### [b] Second embodiment

In the first embodiment, described is the case in which each node 10 has the STA function of the WLAN. Alternatively, the node 10 having the STA function can be limited. The following describes a case of limiting the node 10 having the STA function.

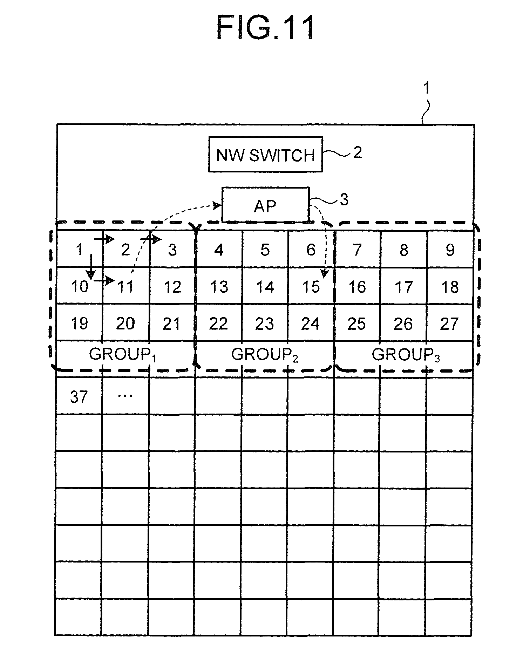

First, grouping of the nodes 10 will be described. FIG. 11 is a diagram illustrating an example of grouping the nodes 10. As illustrated in FIG. 11, every twelve nodes 10 close to each other are grouped. For example, a group₁ includes the node₁ to the node₃, the node₁₀ to the node₁₂, the node₁₉ to the node₂₁, and the node₂₈ to the node₃₀, and a group₂ includes the node₄ to the node, the node₁₃ to the node₁₅, the node₂₂ to the node₂₄, and the node₃₁ to the node₃₃. A group₃ includes the node₇ to the node₉, the node₁₆ to the node₁₈, the node₂₅ to the node₂₇, and the node₃₄ to the node₃₆.

In each group, only one node 10 has the STA function of the WLAN. For example, in the group₁, only the node₁₁ has the STA function. Each node 10 uses the 60 G wireless to communicate with an other node 10 in the group, and uses the WLAN to communicate with a node 10 outside the group.

For example, the node₁ uses the 60 G wireless to transmit the packet to the node₃ in the group. On the other hand, to transmit the packet to the node₁₅ outside the group, the node₁ transmits the packet to the node₁₅ using the WLAN via the node₁₁ having the STA function. The node₁ transmits the packet to the node₁₁ using the 60 G wireless.

In this way, by grouping the nodes 10 and limiting the node 10 having the STA function of the WLAN to be only one in the group, the information processing system can reduce the number of nodes connected to the AP 3 and prevent congestion at the AP 3.

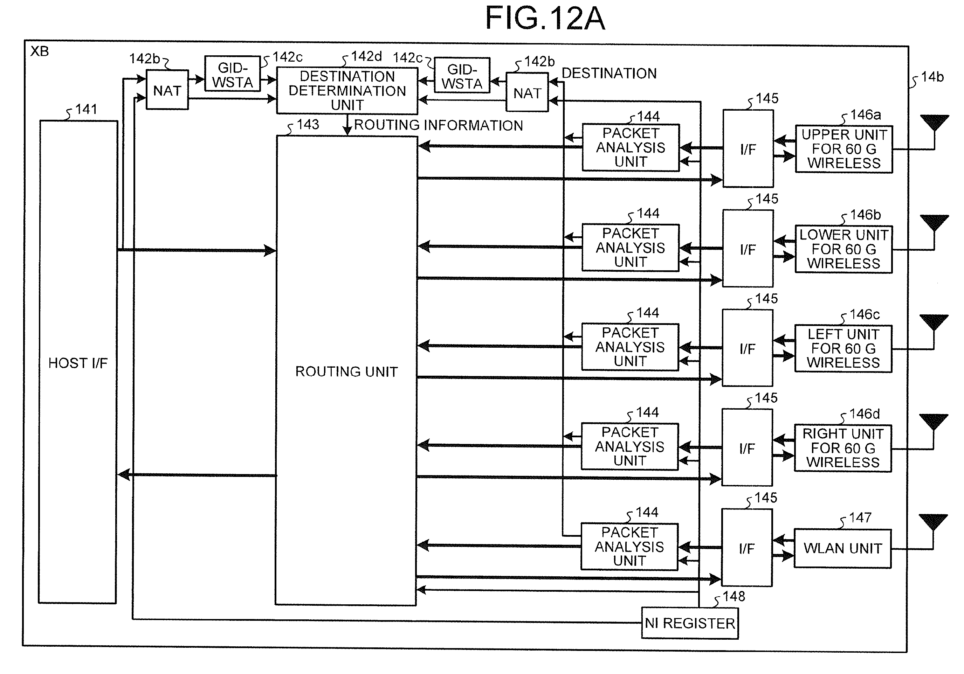

Next, the following describes a configuration of an XB according to a second embodiment. FIG. 12A is a diagram illustrating the configuration of the XB according to the second embodiment. For convenience of explanation, functional parts same as those illustrated in FIG. 3A are denoted by the same reference numerals, and detailed description thereof will not be repeated here.

As illustrated in FIG. 12A, an XB 14b includes the host I/F 141, two NATs 142b, two GID-WSTA 142c associated with the respective NATs 142b, a destination determination unit 142d, the routing unit 143, and the five packet analysis units 144. The XB 14b also includes the five I/Fs 145, the upper unit for 60 G wireless 146a, the lower unit for 60 G wireless 146b, the left unit for 60 G wireless 146c, the right unit for 60 G wireless 146d, the WLAN unit 147, and the NI register 148.

The NAT 142b receives the destination of the packet from the host I/F 141 or the packet analysis unit 144, retrieves the identifier of the destination node 10, and passes the retrieved identifier of the destination node 10 to the destination determination unit 142d and the corresponding GID-WSTA 142c. The NAT 142b retrieves the identifier of the own node from the information about the own node based on the information of the NI register 148, and passes the retrieved identifier of the own node to the destination determination unit 142d and the corresponding GID-WSTA 142c.

The GID-WSTA 142c is a retrieval table that receives the NID from the associated NAT 142b and retrieves a group ID (GID) and presence or absence of STA function based on the NID. The GID-WSTA 142c passes the retrieved GID and the presence or absence of STA function to the destination determination unit 142d. Details about the GID-WSTA 142c will be described later.

The destination determination unit 142d determines the routing destination of the packet based on the NID of the destination of the packet and the NID of the own node retrieved with the NAT 142b and the GID and the presence or absence of STA function retrieved with the GID-WSTA 142c. The destination determination unit 142d then passes the information about the routing destination as the routing information to the routing unit 143.

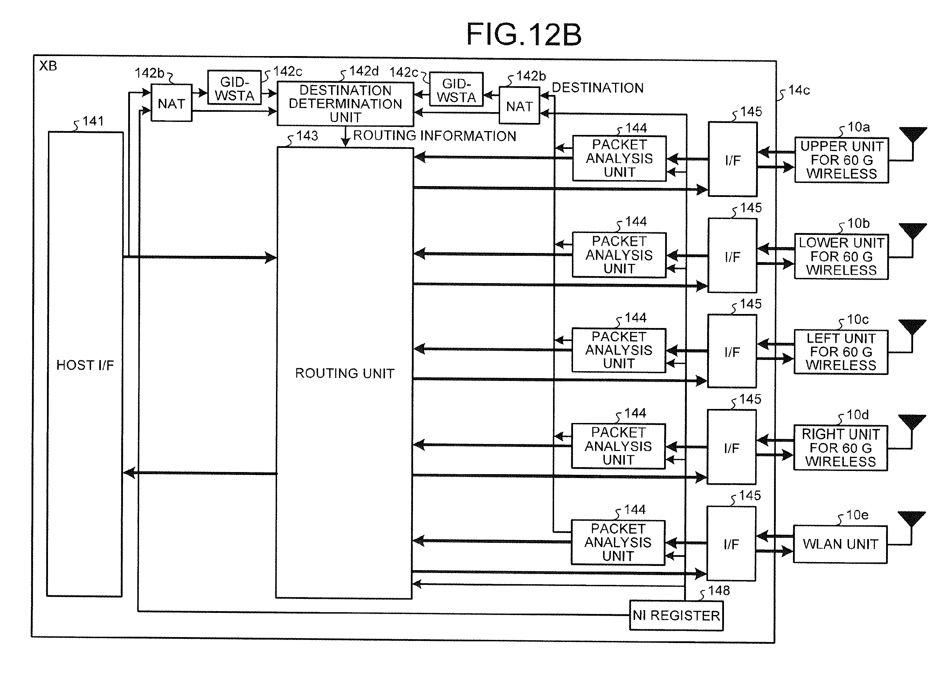

Although the XB 14b illustrated in FIG. 12A includes the 60 G wireless modules and the WLAN unit 147, the 60 G wireless modules and the WLAN unit 147 may be provided outside the XB. The FIG. 12B is a diagram illustrating other configuration of the XB of which 60 G wireless modules and the WLAN unit 147 are provided outside.

As illustrated in FIG. 12B, an XB 14c does not include the upper unit for 60 G wireless 146a, the lower unit for 60 G wireless 146b, the left unit for 60 G wireless 146c, the right unit for 60 G wireless 146d, and the WLAN unit 147. The XB 14c performs wireless communication using the upper unit for 60 G wireless 10a, the lower unit for 60 G wireless 10b, the left unit for 60 G wireless 10c, the right unit for 60 G wireless 10d, and the WLAN unit 10e provided outside.

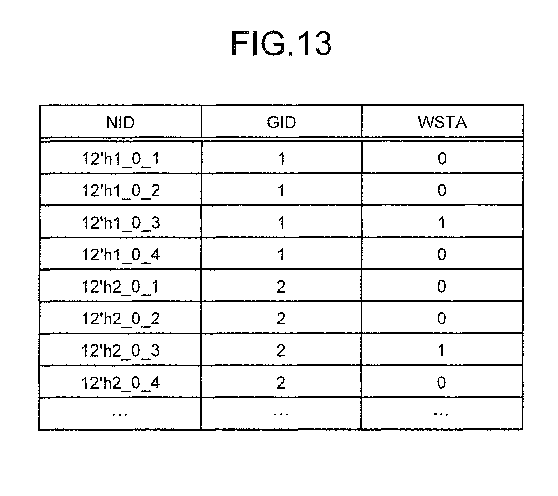

Next, the following describes the details about the GID-WSTA 142c. FIG. 13 is a diagram illustrating an example of the GIDs and the presence or absence of STA function stored in the GID-WSTA 142c. As illustrated in FIG. 13, the GID-WSTA 142c stores therein the NID, the GID, and the WSTA in association with each other for each node 10. The GID represents an identifier for identifying a group to which the destination node 10 belongs. The WSTA represents whether the destination node 10 has the STA function of the WLAN, in which "0" indicates that the destination node 10 does not have the STA function and "1" indicates that the destination node 10 has the STA function.

For example, as illustrated in FIG. 13, the node 10 of which the NID is 12'h1_0_1 belongs to the group of which the GID is 1, and does not have the STA function. The node 10 of which the NID is 12'h2_0_3 belongs to the group of which the GID is 2, and has the STA function.

In this way, the GID-WSTA 142c stores therein the NID, the GID, and the WSTA in association with each other and retrieves the GID and the WSTA based on the NID, so that the node 10 can find the group to which the destination node 10 of the packet belongs. The node 10 can also find the WSTA and the group to which the own node belongs.

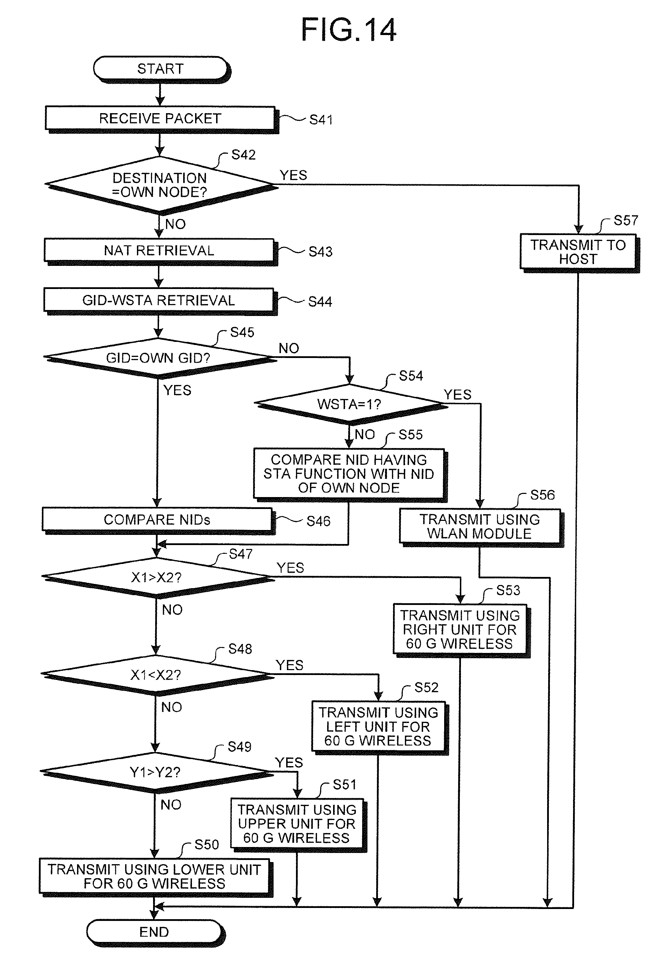

Next, the following describes the procedure of reception processing by the node 10 according to the second embodiment. FIG. 14 is a flowchart illustrating the procedure of the reception processing by the node 10 according to the second embodiment. As illustrated in FIG. 14, when receiving the packet (Step S41), the node 10 determines whether the destination of the packet is the own node (Step S42). If the destination of the packet is the own node, the node 10 transmits the packet to the host (Step S57).

On the other hand, if the destination of the packet is not the own node, the node 10 performs NAT retrieval, that is, table retrieval based on the destination MAC address and the own node using the NAT 142b (Step S43), and retrieves the NIDs of the destination and the own node. The node 10 then performs GID-WSTA retrieval, that is, retrieves the GID and the WSTA based on the NID using the GID-WSTA 142c (Step S44), and retrieves the GID and the WSTA of the destination and the own node.

The node 10 determines whether the retrieved GID is equal to its own GID (Step S45). If the retrieved GID is equal to the own GID, the node 10 compares the NIDs of the destination and the own node with each other (Step S46). The node 10 then determines whether the X-coordinate of the destination X1 is larger than the X-coordinate of the own node X2 (Step S47). If the X-coordinate of the destination X1 is larger than the X-coordinate of the own node X2, the node 10 transmits the packet using the right unit for 60 G wireless 146d (Step S53).

On the other hand, if the X-coordinate of the destination X1 is not larger than the X-coordinate of the own node X2, the node 10 determines whether the X-coordinate of the destination X1 is smaller than the X-coordinate of the own node X2 (Step S48). If the X-coordinate of the destination X1 is smaller than the X-coordinate of the own node X2, the node 10 transmits the packet using the left unit for 60 G wireless 146c (Step S52).

On the other hand, if the X-coordinate of the destination X1 is not smaller than the X-coordinate of the own node X2, which is a case in which X1 is equal to X2, the node 10 determines whether the Y-coordinate of the destination Y1 is larger than the Y-coordinate of the own node Y2 (Step S49). If the Y-coordinate of the destination Y1 is larger than the Y-coordinate of the own node Y2, the node 10 transmits the packet using the upper unit for 60 G wireless 146a (Step S51). On the other hand, if the Y-coordinate of the destination Y1 is not larger than the Y-coordinate of the own node Y2, the node 10 transmits the packet using the lower unit for 60 G wireless 146b (Step S50).

If the retrieved GID is not equal to the own GID (No at Step S45), which is a case in which the packet is transmitted to an other group, the node 10 determines whether the WSTA of the own node is 1 (Step S54). If the WSTA of the own node is not 1, the node 10 routes the packet to the 60 G wireless module used in a case of transmitting the packet to the node 10 of which the WSTA is 1 in the group. That is, the node 10 compares the NID having the STA function in its own group with the NID of the own node (Step S55), and the process proceeds to Step S47. On the other hand, if the WSTA of the own node is 1, the node 10 transmits the packet using the WLAN module (Step S56).

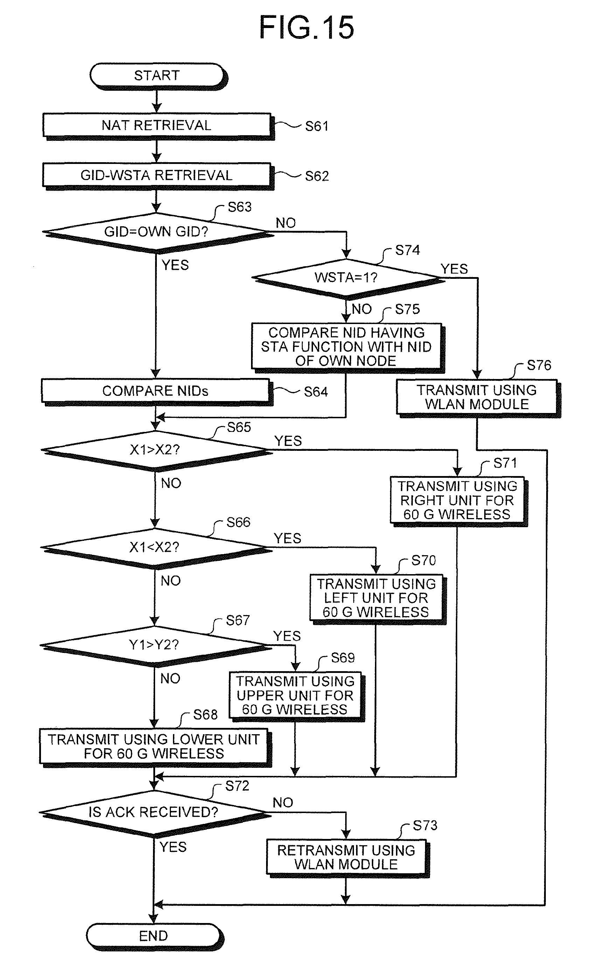

Next, the following describes the procedure of transmission processing by the node 10 according to the second embodiment. FIG. 15 is a flowchart illustrating the procedure of the transmission processing by the node 10 according to the second embodiment. As illustrated in FIG. 15, the node 10 performs NAT retrieval, that is, table retrieval based on the destination MAC address and the own node using the NAT 142b (Step S61), and retrieves the NIDs of the destination and the own node. The node 10 then performs GID-WSTA retrieval, that is, retrieves the GID and the WSTA based on the NID using the GID-WSTA 142c (Step S62), and retrieves the GID and the WSTA of the destination and the own node.

The node 10 determines whether the retrieved GID is equal to its own GID (Step S63). If the retrieved GID is equal to the own GID, the node 10 compares the NIDs of the destination and the own node with each other (Step S64). The node 10 then determines whether the X-coordinate of the destination X1 is larger than the X-coordinate of the own node X2 (Step S65). If the X-coordinate of the destination X1 is larger than the X-coordinate of the own node X2, the node 10 transmits the packet using the right unit for 60 G wireless 146d (Step S71), and the process proceeds to Step S72.

On the other hand, if the X-coordinate of the destination X1 is not larger than the X-coordinate of the own node X2, the node 10 determines whether the X-coordinate of the destination X1 is smaller than the X-coordinate of the own node X2 (Step S66). If the X-coordinate of the destination X1 is smaller than the X-coordinate of the own node X2, the node 10 transmits the packet using the left unit for 60 G wireless 146c (Step S70), and the process proceeds to Step S72.

On the other hand, if the X-coordinate of the destination X1 is not smaller than the X-coordinate of the own node X2, which is a case in which X1 is equal to X2, the node 10 determines whether the Y-coordinate of the destination Y1 is larger than the Y-coordinate of the own node Y2 (Step S67). If the Y-coordinate of the destination Y1 is larger than the Y-coordinate of the own node Y2, the node 10 transmits the packet using the upper unit for 60 G wireless 146a (Step S69), and the process proceeds to Step S72. On the other hand, if the Y-coordinate of the destination Y1 is not larger than the Y-coordinate of the own node Y2, the node 10 transmits the packet using the lower unit for 60 G wireless 146b (Step S68).

The node 10 then determines whether ACK is received (Step S72). The node 10 ends the process if the ACK is received, and retransmits the packet using the WLAN module if the ACK is not received (Step S73).

If the retrieved GID is not equal to the own GID (No at Step S63), which is a case in which the packet is transmitted to the other group, the node 10 determines whether the WSTA of the own node is 1 (Step S74). If the WSTA of the own node is not 1, the node 10 routes the packet to the 60 G wireless module used in a case of transmitting the packet to the node 10 of which the WSTA is 1 in the group. That is, the node 10 compares the NID having the STA function in its own group with the NID of the own node (Step S75), and the process proceeds to Step S65. On the other hand, if the WSTA of the own node is 1, the node 10 transmits the packet using the WLAN module (Step S76).

In this way, to transmit the packet to the outside of the group, the node 10 transmits the packet to the node 10 having the STA function in the group, and the node 10 having the STA function transmits the packet using the WLAN. Accordingly, the information processing system can reduce the congestion at the AP 3.

As described above, in the second embodiment, the nodes 10 close to each other are grouped, and the node 10 transmits the packet using the 60 G wireless within the same group and transmits the packet using the WLAN to an other group. Accordingly, the node 10 can properly use the 60 G wireless and the WLAN using the GID, and the information processing system can connect a large number of nodes 10 with each other at high speed in a wireless manner. Herein, twelve nodes 10 close to each other are grouped. Alternatively, the information processing system can group an arbitrary number of nodes 10.

### [c] Third embodiment

In the first and the second embodiments, described is the case in which the 60 G wireless module communicates only with the nodes 10 adjacent above, below, on the left and right. Alternatively, the 60 G wireless module can communicate with the node 10 across some nodes 10. In a third embodiment, described is a case in which the 60 G wireless module communicates with the node 10 across some nodes 10.

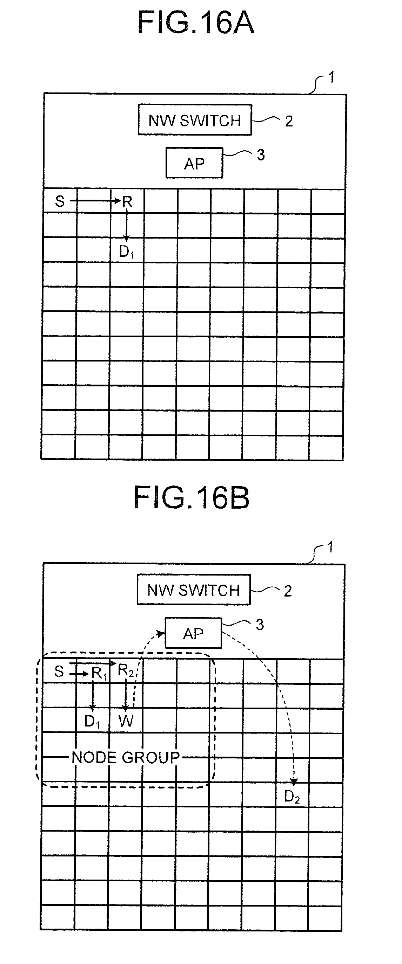

FIG. 16A and FIG. 16B are diagrams illustrating a communication image according to the third embodiment. FIG. 16A illustrates a case of transmitting the packet using the 60 G wireless to the neighbor node 10 corresponding to the first embodiment, and FIG. 16B illustrates a case of transmitting the packet to the node 10 inside or outside the group corresponding to the second embodiment.

As illustrated in FIG. 16A, to transmit the packet to a neighbor node D₁, a node S as a transmission source transmits the packet using the 60 G wireless to a relay node R across one node in the right direction. The relay node R transmits the packet using the 60 G wireless to the node D₁ across one node in the downward direction.

As illustrated in FIG. 16B, to transmit the packet to the node D₁ within the group, the node S as the transmission source transmits the packet using the 60 G wireless to a relay node R₁ adjacent on the right. The relay node R₁ then transmits the packet using the 60 G wireless to the node D₁ across one node in the downward direction. To transmit the packet to a node D₂ outside the group, the node S as the transmission source transmits the packet using the 60 G wireless to a relay node R₂ across one node in the right direction. The relay node R₂ then transmits the packet using the 60 G wireless to a node W across one node in the downward direction. Herein, the node W has the STA function of the WLAN, and transmits the packet to the node D₂ via the AP 3 using the WLAN.

In this way, to transmit the packet to the neighbor node 10 or the node 10 within the group, the node 10 according to the third embodiment transmits the packet to the relay node of which the Y-coordinate is the same as that of the own node and the X-coordinate thereof is the same as that of the destination node 10 using left or right 60 G wireless modules. The relay node then transmits the received packet to the destination node 10 using upper or lower 60 G wireless modules. Accordingly, when the node 10 according to the third embodiment transmits the packet using the 60 G wireless, the number of relay nodes 10 can be reduced and the packet can be transmitted at higher speed.

The node 10 that does not need to relay the packet such as the node 10 interposed between the transmission source node and the relay node discards the received packet. Accordingly, only the relay node can transmit the packet from the transmission source to the destination.

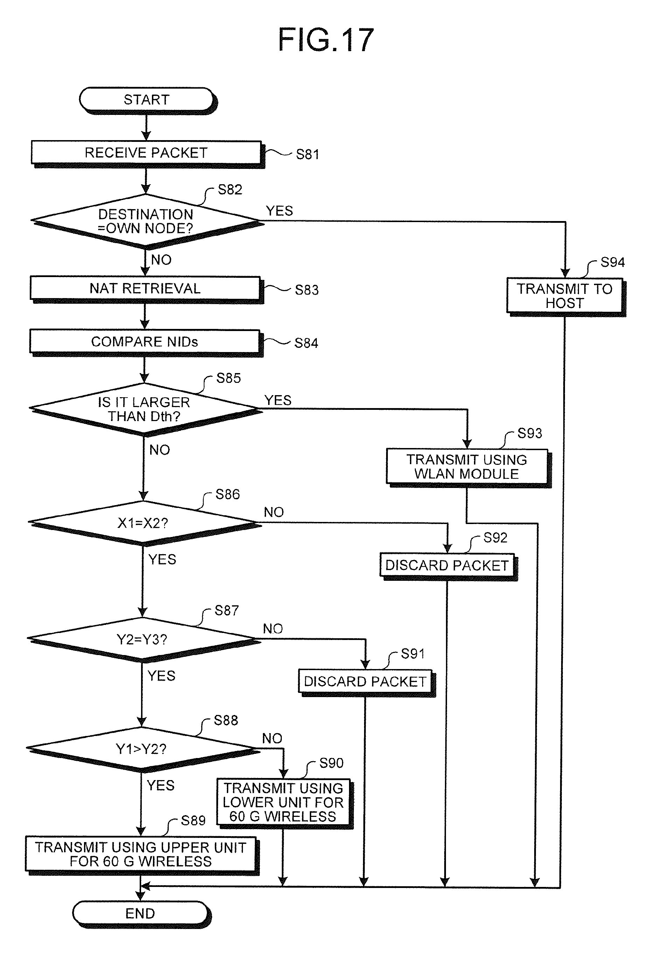

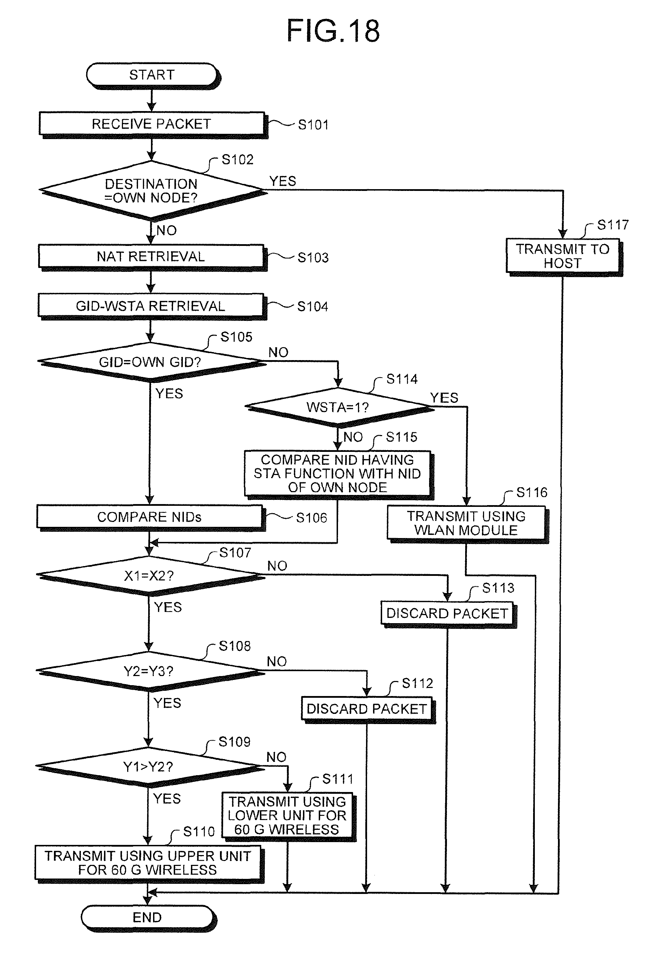

Next, the following describes the procedure of reception processing by the node 10 according to the third embodiment. FIG. 17 is a first flowchart illustrating the procedure of the reception processing by the node 10 according to the third embodiment, and FIG. 18 is a second flowchart illustrating the procedure of the reception processing by the node 10 according to the third embodiment. FIG. 17 illustrates a case in which the node 10 transmits the packet based on the distance to the node 10 as the transmission destination corresponding to the first embodiment, and FIG. 18 illustrates a case in which the node 10 transmits the packet to the node 10 inside or outside the group corresponding to the second embodiment.

As illustrated in FIG. 17, when receiving the packet (Step S81), the node 10 determines whether the destination of the packet is the own node (Step S82). If the destination of the packet is the own node, the node 10 transmits the packet to the host (Step S94).

On the other hand, if the destination of the packet is not the own node, the node 10 performs NAT retrieval, that is, table retrieval based on the destination MAC address and the own node using the NAT 142a (Step S83), and retrieves the NIDs of the destination and the own node. The node 10 then compares the NIDs of the destination and the own node with each other (Step S84) to determine whether the sum of the difference between the X-coordinates and the difference between the Y-coordinates is larger than the predetermined threshold Dth (Step S85). If the sum of the difference between the X-coordinates and the difference between the Y-coordinates is larger than the predetermined threshold Dth, the node 10 transmits the packet using the WLAN module (Step S93).

On the other hand, if the sum of the difference between the X-coordinates and the difference between the Y-coordinates is not larger than the predetermined threshold Dth, the node 10 determines whether the X-coordinate of the destination X1 is equal to the X-coordinate of the own node X2 (Step S86). If the X-coordinate of the destination X1 is not equal to the X-coordinate of the own node X2, which is a case in which the own node is not the relay node, the node 10 discards the packet (Step S92).

On the other hand, if the X-coordinate of the destination X1 is equal to the X-coordinate of the own node X2, the node 10 determines whether the Y-coordinate of the own node Y2 is equal to the Y-coordinate of the transmission source Y3 (Step S87). If the Y-coordinate of the own node Y2 is not equal to the Y-coordinate of the transmission source Y3, which is a case in which the own node is not the relay node, the node 10 discards the packet (Step S91).

On the other hand, if the Y-coordinate of the own node Y2 is equal to the Y-coordinate of the transmission source Y3, which is a case in which the own node is the relay node, the node 10 determines whether the Y-coordinate of the destination Y1 is larger than the Y-coordinate of the own node Y2 (Step S88). If the Y-coordinate of the destination Y1 is larger than the Y-coordinate of the own node Y2, the node 10 transmits the packet using the upper unit for 60 G wireless 146a (Step S89). On the other hand, if the Y-coordinate of the destination Y1 is not larger than the Y-coordinate of the own node Y2, the node 10 transmits the packet using the lower unit for 60 G wireless 146b (Step S90).

As illustrated in FIG. 18, when receiving the packet (Step S101) in the reception processing corresponding to the second embodiment, the node 10 determines whether the destination of the packet is the own node (Step S102). If the destination of the packet is the own node, the node 10 transmits the packet to the host (Step S117).

On the other hand, if the destination of the packet is not the own node, the node 10 performs NAT retrieval, that is, table retrieval based on the destination MAC address and the own node using the NAT 142b (Step S103), and retrieves the NIDs of the destination and the own node. The node 10 then performs GID-WSTA retrieval, that is, retrieves the GID and the WSTA based on the NID using the GID-WSTA 142c (Step S104), and retrieves the GID and the WSTA of the destination and the own node.

The node 10 determines whether the retrieved GID is equal to its own GID (Step S105). If the retrieved GID is equal to the own GID, the node 10 compares the NIDs of the destination and the own node with each other (Step S106). The node 10 then determines whether the X-coordinate of the destination X1 is equal to the X-coordinate of the own node X2 (Step S107). If the X-coordinate of the destination X1 is not equal to the X-coordinate of the own node X2, which is a case in which the own node is not the relay node, the node 10 discards the packet (Step S113).

On the other hand, if the X-coordinate of the destination X1 is equal to the X-coordinate of the own node X2, the node 10 determines whether the Y-coordinate of the own node Y2 is equal to the Y-coordinate of the transmission source Y3 (Step S108). If the Y-coordinate of the own node Y2 is not equal to the Y-coordinate of the transmission source Y3, which is a case in which the own node is not the relay node, the node 10 discards the packet (Step S112).

On the other hand, if the Y-coordinate of the own node Y2 is equal to the Y-coordinate of the transmission source Y3, which is a case in which the own node is the relay node, the node 10 determines whether the Y-coordinate of the destination Y1 is larger than the Y-coordinate of the own node Y2 (Step S109). If the Y-coordinate of the destination Y1 is larger than the Y-coordinate of the own node Y2, the node 10 transmits the packet using the upper unit for 60 G wireless 146a (Step S110). On the other hand, if the Y-coordinate of the destination Y1 is not larger than the Y-coordinate of the own node Y2, the node 10 transmits the packet using the lower unit for 60 G wireless 146b (Step S111).

If the retrieved GID is not equal to the own GID (No at Step S105), which is a case in which the packet is transmitted to the other group, the node 10 determines whether the WSTA of the own node is 1 (Step S114). If the WSTA of the own node is not 1, the node 10 routes the packet to the 60 G wireless module used in a case of transmitting the packet to the node 10 of which the WSTA is 1 in the group. That is, the node 10 compares the NID having the STA function in its own group with the NID of the own node (Step S115), and the process proceeds to Step S107. On the other hand, if the WSTA of the own node is 1, the node 10 transmits the packet using the WLAN module (Step S116).

In this way, when receiving the packet, the node 10 discards the received packet in a case in which the own node is not the destination nor the relay node. Accordingly, only the relay node can relay the packet, which can prevent a plurality of same packets from being transmitted to the destination.

As described above, in the third embodiment, in a case of transmitting the packet using the 60 G wireless, the node 10 transmits the packet to the relay node of which the Y-coordinate is the same as that of the own node and the X-coordinate thereof is the same as that of the destination node 10 using left or right 60 G wireless modules. The relay node then transmits the received packet to the destination node 10 using upper or lower 60 G wireless modules. Accordingly, when the node 10 transmits the packet using the 60 G wireless, the number of relay nodes 10 can be reduced and the packet can be transmitted at higher speed.

In the third embodiment, described is the case in which the transmission source node transmits the packet to the node 10 in the horizontal direction and the relay node transmits the packet to the destination in the vertical direction. Alternatively, the transmission source node may transmit the packet to the node 10 in the vertical direction and the relay node may transmit the packet to the destination in the horizontal direction.

In the first to the third embodiments, described is the case in which the XB is implemented in hardware. Alternatively, by implementing a routing function of the XB with software, a communication program having the same function can be obtained. The following describes a hardware configuration of the XB that executes the communication program.

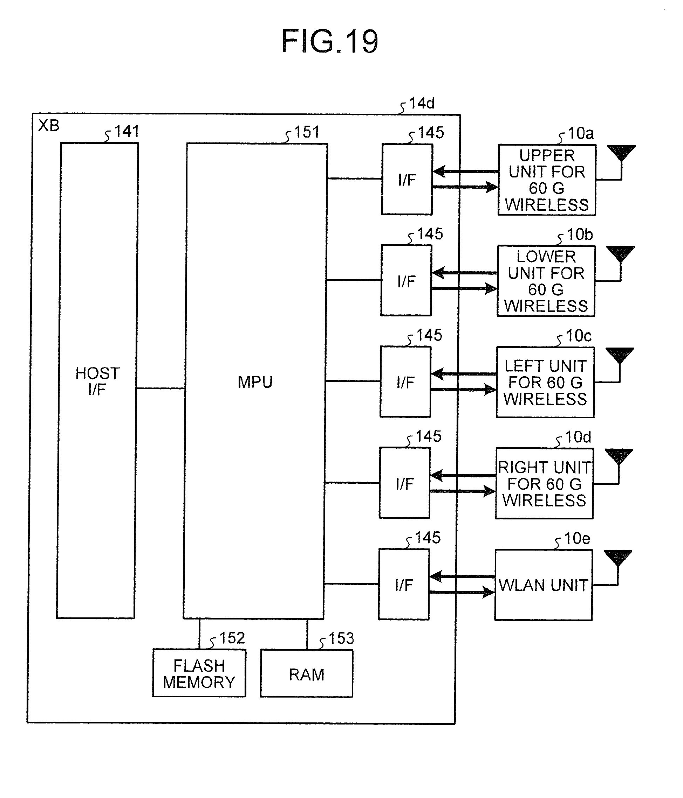

FIG. 19 is a diagram illustrating the hardware configuration of the XB that executes the communication program. As illustrated in FIG. 19, an XB 14d includes the host I/F 141, the five I/Fs 145, a micro processing unit (MPU) 151, a flash memory 152, and a random access memory (RAM) 153.

The host I/F 141 is an interface with the CPU 11 of its own node. The host I/F 141 passes the packet received from the CPU 11 to the MPU 151, and passes the packet received from the MPU 151 to the CPU 11 of the own node. The I/F 145 converts a signal received from the 60 G wireless module or the WLAN module into a packet, and passes the packet to the MPU 151. The I/F 145 also converts the packet received from the MPU 151 into a signal and passes the signal to the 60 G wireless module or the WLAN module connected thereto.

The MPU 151 is a processing unit that reads and executes the communication program from the flash memory 152. The flash memory 152 is a nonvolatile memory that stores therein the communication program. The flash memory 152 also stores therein information stored in the NAT 142b and the GID-WSTA 142c, and information stored in the NI register 148. The RAM 153 is a memory that stores therein a table or a result in the midway obtained in the execution of the computer program. The information stored in the NAT 142b and the GID-WSTA 142c is read out from the flash memory 152 to be written to the RAM 153 when the communication program is executed.

In the first to third embodiments, described is a case of using the WLAN and the 60 G wireless that uses the frequency of 60 GHz band. However, the present invention is not limited to the 60 G wireless and the WLAN, and may also be applied to a case of appropriately combining two types of wireless module or wired communication of which the communication speed and range where radio waves reach are different.

According to an embodiment, a proper routing destination can be automatically determined with respect to a large number of destinations.

## Claims

1. An information processing device (10) comprising:
an identifier storage unit (142a, 142b) that stores a device identifier, the device identifier identifying the information processing device (10) and a position at which the information processing device (10) is mounted in a housing (1), in association with an address of the information processing device (10);
an identifier retrieval unit (142a, 142b) that retrieves the device identifier corresponding to a destination address of data from the identifier storage unit (142a, 142b);
a determination unit (142, 142d) that determines a routing destination of the data based on the device identifier retrieved by the identifier retrieval unit (142a) and the device identifier of the information processing device (10); and
a control unit (143) that performs control to transmit the data to the routing destination determined by the determination unit (142, 142d).

2. The information processing device (10) according to claim 1, wherein
the determination unit (142, 142d) determines the routing destination and a communication scheme, and
the control unit (143) performs control to transmit the data using the communication scheme determined by the determination unit (142, 142d).

3. The information processing device (10) according to claim 2, wherein the information processing device (10) and another information processing device (10) are grouped based on positions in the housing (1),
the information processing (10) device further comprises:
a group storage unit (142c) that stores the device identifier in association with a group identifier that identifies a group of the information processing device (10) identified with the device identifier; and
a group retrieval unit (142c) that retrieves the group identifier corresponding to the device identifier retrieved by the identifier retrieval unit (142b) from the group storage unit (142c),
the determination unit (142d) determines the communication scheme and the routing destination of the data based on the device identifier retrieved by the identifier retrieval unit (142b), the position of the information processing device (10) in the housing (1), and the group identifier retrieved by the group retrieval unit (142c), and
the control unit (143) performs control to transmit the data based on the routing destination and the communication scheme determined by the determination unit (142d).

4. The information processing device (10) according to claim 3, wherein
only one information processing device (10) in the group comprises a first communication unit (10e, 147) that communicates with another information processing device (10) using a first communication scheme, and
the control unit (143) transfers the data using a second communication unit (10a, 146a, 10b, 146b, 10c, 146c, 10d, 146d) to the information processing device (10) comprising the first communication unit (10e, 147) to transmit the data using the first communication scheme.

5. The information processing device (10) according to claim 2, wherein the determination unit (142, 142d) determines a communication scheme from among communication schemes including a first communication scheme and a second communication scheme as the communication scheme, and determines an adjacent information processing device (10) as the routing destination when the determined communication scheme is the second communication scheme.

6. The information processing device (10) according to claim 5, wherein the determination unit (142, 142d) also determines an information processing device (10) other than the adjacent information processing device (10) as the routing destination when the determined communication scheme is the second communication scheme.

7. The information processing device (10) according to any one of claims 2 to 6, wherein the control unit (143) performs control to transmit the data using a different communication scheme when the transmission of the data is failed.

8. A communication method performed by an information processing device, the communication method comprising:
retrieving a device identifier corresponding to a destination address of data from an identifier storage unit that stores a device identifier, the device identifier identifying the information processing device and a position at which the information processing device is mounted in a housing, in association with an address of the information processing device;
determining a routing destination of the data based on the retrieved device identifier and the device identifier of the information processing device; and
transmitting the data to the determined routing destination.

9. A computer-readable storage medium storing a communication program causing a computer embedded in an information processing device to execute a process comprising:
retrieving a device identifier corresponding to a destination address of data from an identifier storage unit that stores a device identifier, the device identifier identifying the information processing device and a position at which the information processing device is mounted in a housing, in association with an address of the information processing device;
determining a routing destination of the data based on the retrieved device identifier and the device identifier of the information processing device; and
transmitting the data to the determined routing destination.
